(19) Europäisches Patentamt
European Patent Office
Office européen des brevets

(11) Veröffentlichungsnummer: **0 224 438**
**B1**

(12) # EUROPÄISCHE PATENTSCHRIFT

(45) Veröffentlichungstag der Patentschrift: **05.04.89**

(51) Int. Cl.⁴: **C07C 69/96**, C08K 5/10

(21) Anmeldenummer: **86810476.1**

(22) Anmeldetag: **24.10.86**

(54) **alpha,beta-Ungesättigte Carbonylverbindungen.**

(30) Priorität: **30.10.85 CH 4659/85**

(43) Veröffentlichungstag der Anmeldung:
**03.06.87 Patentblatt 87/23**

(45) Bekanntmachung des Hinweises auf die Patenterteilung:
**05.04.89 Patentblatt 89/14**

(84) Benannte Vertragsstaaten:
**BE DE ES FR GB IT**

(56) Entgegenhaltungen:
**FR-A- 2 383 987**

**THE JOURNAL OF ORGANIC CHEMISTRY, Band 50, Nr. 11, 31. Mai 1985, Seiten 1955-1959, American Chemical Society, Columbus, Ohio, US; R.P. POTMAN et al.: "Tailor-made butadienes for the site-selective cycloaddition with quinizarinquinone and other unsymmetrically substituted quinones" 000**

(73) Patentinhaber: **CIBA-GEIGY AG, Klybeckstrasse 141, CH-4002 Basel(CH)**

(72) Erfinder: **Wirth, Hermann O., Dr., Lessingstrasse 24, D-6140 Bensheim 3(DE)**
Erfinder: **Michaelis, Klaus-Peter, Dr., Am Hangweg 8, D-6145 Lindenfels/Odenwald(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 224 438 B1

## Beschreibung

Die vorliegende Erfindung betrifft neue, ungesättigte Kohlensäureester, ihre Verwendung sowie die mit ihrer Hilfe gegen den schädigenden Einfluss von Licht und/oder Wärme stabilisierten chlorhaltigen Polymerisate.

Einige Derivate von ungesättigten Kohlensäureestern sind seit langem bekannt (A. Michael et al., J.A.C.S. 53, 2394–2414 (1931)). Es wurde zum Beispiel die Migration von Methoxycarbonylgruppen in Kohlensäureestern untersucht (V.J. Minkin, Zh.Org.Khim. 11(6), 1163–8 (1975)).

In der US-Patentschrift 3 746 736 wird die Herstellung von α,β-ungesättigten Carbonylverbindungen beschrieben sowie ihre Verwendung als Zwischenprodukte für Arzneistoffe und als Ausgangsstoffe für Polymere erwähnt.

Es ist bekannt, dass chlorhaltige Polymerisate gegen den schädigenden Einfluss von Licht und Wärme, insbesondere bei der Verarbeitung zu Formteilen, geschützt werden müssen. In der französischen Patentschrift 2 383 987 werden stabilisierte Polyvinylchloridzusammensetzungen offenbart, die Enolcarboxylate von 1,3-Diketonen enthalten. In dem US-Patent 4 102 839 wird ein Hitzestabilisator bestehend aus Metallcarboxylaten und 1,3-Diketoverbindungen für Polymerisate auf der Basis von Vinylchlorid beschrieben.

Es wurde nun gefunden, dass bestimmte ungesättigte Kohlensäureester überraschenderweise einen günstigen Einfluss auf die Farbstabilität von chlorhaltigen Polymerisaten bei der thermoplastischen Verarbeitung und bei der Belichtung besitzen.

Die vorliegende Erfindung betrifft neue Verbindung der Formeln Ia und Ib

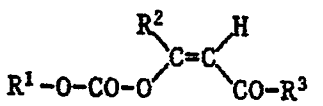 (Ia), 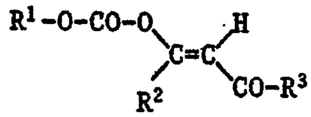 (Ib),

worin $R^1$ $C_6$–$C_{22}$Alkyl, Phenyl, durch ein oder zwei $C_1$–$C_9$Alkyl substituiertes Phenyl, $C_5$–$C_7$Cycloalkyl oder eine Gruppe der Formel IIa oder IIb ist

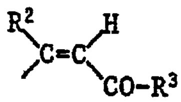 (IIa), 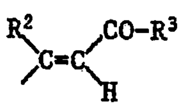 (IIb)

oder $R^1$ eine Gruppe der Formel IIIa oder IIIb ist

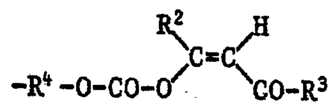 (IIIa),

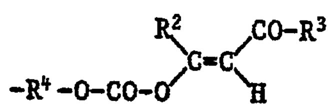 (IIIb),

$R^2$ und $R^3$ unabhängig voneinander $C_1$–$C_{20}$Alkyl, Phenyl, durch ein oder zwei $C_1$–$C_9$Alkyl substituiertes Phenyl oder $C_5$–$C_7$Cycloalkyl sind und $R^4$ $C_2$–$C_{12}$Alkylen ist.

Von Interesse sind Verbindungen der Formeln Ia und Ib, worin $R^2$ und $R^3$ unabhängig voneinander $C_2$–$C_{18}$Alkyl, Phenyl, durch ein oder zwei $C_1$–$C_9$Alkyl substituiertes Phenyl oder $C_5$–$C_7$Cycloalkyl sind.

Bevorzugt sind Verbindungen der Formeln Ia und Ib, worin $R^1$ $C_6$–$C_{22}$Alkyl, Phenyl, durch ein oder zwei $C_1$–$C_9$Alkyl substituiertes Phenyl, $C_5$–$C_7$Cycloalkyl oder eine Gruppe der Formel IIIa oder IIIb ist.

Ebenfalls bevorzugt sind Verbindungen der Formeln Ia und Ib, worin $R^1$ $C_6$–$C_{22}$Alkyl, Phenyl, durch ein oder zwei $C_1$–$C_9$Alkyl substituiertes Phenyl oder $C_5$–$C_7$Cycloalkyl ist.

Von Interesse sind Verbindungen der Formeln Ia und Ib, worin $R^1$ $C_6$–$C_{22}$Alkyl ist, $R^2$ und $R^3$ unabhängig voneinander $C_1$–$C_4$Alkyl, Phenyl oder durch ein oder zwei $C_1$–$C_9$Alkyl substituiertes Phenyl bedeuten.

Von besonderem Interesse sind Verbindungen der Formeln Ia und Ib worin $R^1$ $C_6$–$C_{16}$Alkyl ist und $R^2$ und $R^3$ unabhängig voneinander Methyl oder Phenyl sind.

$R^1$ ist bevorzugt eine Gruppe der Formel IIIa oder IIIb und besonders bevorzugt $C_6$–$C_{22}$Alkyl.

Von Interesse sind Verbindungen der Formeln Ia und Ib, worin $R^3$ Phenyl oder durch ein oder zwei $C_1$–$C_9$Alkyl substituiertes Phenyl bedeutet.

$R^1$ als Alkyl bedeutet beispielsweise Hexyl, Heptyl, Octyl, Nonyl, Decyl, Undecyl, Dodecyl, Tetradecyl, Hexadecyl, Icosyl oder Docosyl. $R^1$ ist bevorzugt $C_8$–$C_{16}$Alkyl und besonders bevorzugt Octyl oder Hexadecyl.

$R^1$, $R^2$ und $R^3$ als durch ein oder zwei $C_1$–$C_9$Alkyl substituiertes Phenyl bedeuten z.B. Methylphenyl, Dimethylphenyl, Methyl-ethylphenyl, Ethylphenyl, Methyl-butylphenyl, Dibutylphenyl, Butylphenyl oder Octylphenyl.

$R^1$, $R^2$ und $R^3$ als $C_5$–$C_7$Cycloalkyl bedeuten beispielsweise Cyclopentyl, Cyclohexyl oder Cycloheptyl.

$R^2$ und $R^3$ als $C_1$–$C_{20}$Alkyl und bevorzugt als $C_1$–$C_4$Alkyl bedeuten z.B. Methyl, Ethyl, Propyl, Butyl, Pentyl, Hexyl, Heptyl, Octyl, Nonyl, Decyl, Undecyl, Dodecyl, Tetradecyl, Hexadecyl oder Icosyl. Methyl ist bevorzugt.

$R^4$ als $C_2$–$C_{12}$Alkylen bedeutet beispielsweise Ethylen, Trimethylen, Tetramethylen, Pentamethylen, Hexamethylen, Heptamethylen, Octamethylen, Decamethylen oder Dodecamethylen.

Beispiele für Verbindungen der Formeln Ia und Ib sind:
1-n-Hexadecyloxycarbonyloxy-1-phenyl-2-benzoylethen
1-n-Hexadecyloxycarbonyloxy-1-methyl-2-benzoylethen
1-n-Hexadecyloxycarbonyloxy-1-methyl-2-acetylethen
1-(2,2,4-Trimethylpentyloxycarbonyloxy)-1-phenyl-2-benzoylethen
1-(2,2,4-Trimethylpentyloxycarbonyloxy)-1-methyl-2-benzoylethen
1-(2,2,4-Trimethylpentyloxycarbonyloxy)-1-methyl-2-acetylethen

Ein weiterer Gegenstand der Erfindung sind gegen den schädigenden Einfluss von Licht und/oder Wärme stabilisierte chlorhaltige Polymerisate, enthaltend eine oder mehrere Verbindungen der Formeln Ia* und/oder Ib*,

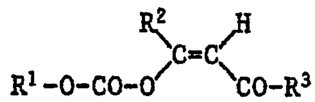 (Ia*), 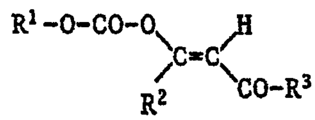 (Ib*)

worin $R^1$ $C_1$–$C_{22}$Alkyl, Phenyl, durch ein oder zwei $C_1$–$C_9$Alkyl substituiertes Phenyl, $C_5$–$C_7$Cycloalkyl oder eine Gruppe der Formel IIa, IIb, IIIa oder IIIb ist,
$R^2$ und $R^3$ unabhängig voneinander $C_1$–$C_{20}$Alkyl, Phenyl, durch ein oder zwei $C_1$–$C_9$Alkyl substituiertes Phenyl oder $C_5$–$C_7$Cycloalkyl sind und $R^4$ $C_2$–$C_{12}$Alkylen ist.

Bei den chlorhaltigen Polymerisaten handelt es sich bevorzugt um Vinylchloridhomopolymere oder -copolymere. Weiterhin bevorzugt sind Suspensions- und Massepolymere sowie Emulsionspolymere. Als Comonomere für die Copolymerisate kommen z.B. in Frage: Vinylacetat, Vinylidenchlorid, Transdichlorethen, Ethylen, Propylen, Butylen, Maleinsäure, Acrylsäure, Fumarsäure, Itaconsäure. Weitere geeignete chlorhaltige Polymere sind nachchloriertes PVC und chlorierte Polyolefine, ferner Pfropfpolymerisate von PVC mit EVA, ABS und MBS.

Es ist vorteilhaft, die erfindungsgemässen Verbindungen zusammen mit bekannten Thermostabilisatoren einzusetzen, wie z.B. Organozinnverbindungen, Bleiverbindungen, organische Antimonverbindungen, Me(II)-Phenolate, insbesondere $C_7$–$C_{20}$Alkylphenolate, wie beispielsweise Nonylphenolat, oder Me(II)-Carboxylate. Me(II) bedeutet z.B. Ba, Ca, Mg, Cd oder Zn. Bei den Carboxylaten handelt es sich bevorzugt um Salze von Carbonsäuren mit 7 bis 20 C-Atomen, beispielsweise Benzoate, Alkenoate oder Alkanoate, bevorzugt Stearate, Oleate, Laurate, Palmitate, Hydroxystearate oder 2-Ethylhexanoate. Besonders bevorzugt sind Stearate, Oleate und p-tert.-Butylbenzoate.

<u>Als Organozinnverbindungen seien genannt:</u>

I) <u>Organozinnmercaptide</u>, insbesondere solche der Formeln IVa und IVb,

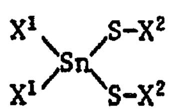 (IVa)

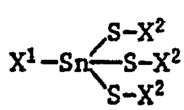 (IVb)

worin $X^1$ $C_6$–$C_{20}$Alkoxycarbonylalkyl oder $C_1$–$C_{20}$Alkyl, bevorzugt $C_1$–$C_{12}$Alkyl und besonders bevorzugt Methyl, n-Butyl, n-Octyl oder n-Dodecyl bedeutet und $X^2$ $C_6$–$C_{20}$Alkoxycarbonylalkyl, $C_6$–$C_{20}$Alkylcarbonyloxyalkyl oder $C_4$–$C_{18}$Alkyl, insbesondere Isooctyl, ist.

$X^1$ und $X^2$ bedeuten als $C_6$–$C_{20}$Alkoxycarbonylalkyl zum Beispiel ($C_4$–$C_{17}$Alkyl)–O–CO–$CH_2CH_2$– oder ($C_4$–$C_{18}$Alkyl)–O–CO–$CH_2$–, wie z.B. Hexoxycarbonylethyl, Isooctoxycarbonylmethyl, Isooctoxycarbonylethyl oder Dodecyloxycarbonylethyl. Isooctoxycarbonylethyl ist bevorzugt.

$X^2$ bedeutet als $C_6$–$C_{20}$Alkylcarbonyloxyalkyl zum Beispiel ($C_4$–$C_{17}$Alkyl)–CO–O–$CH_2CH_2$–, insbesondere Isooctylcarbonyloxyethyl.

Bevorzugt sind Methylzinn-tris[alkylthioglykolat], n-Butylzinn-tris[alkylthioglykolat], n-Butoxycarbonylethylzinn-tris[alkylthioglykolat], Dimethylzinn-bis[alkylthioglykolat], Di-n-butylzinn-bis[alkylthioglykolat], Bis[n-butoxycarbonylethyl]zinn-bis[alkylthioglykolat], Methylzinn-tris[alkylthiopropionat], n-Butylzinn-tris[alkylthiopropionat], n-Butoxycarbonylethylzinn-tris[alkylthiopropionat], Dimethylzinn-bis[alkylthiopropionat], Di-n-butylzinn-bis[alkylthiopropionat] und Bis[n-Butoxycarbonylethyl]zinn-bis[alkylthiopropionat], wobei Alkyl beispielsweise Isooctyl (= 2-Ethylhexyl), Dodecyl, Tridecyl oder Tetradecyl bedeutet. Besonders bevorzugt sind Di-n-butylzinn-bis[isooctylthioglykolat], n-Butylzinn-tris[n-tetradecylthioglykolat], Di-n-octylzinn-bis-[isooctylthioglykolat] und n-Octylzinn-tris[isooctylthioglykolat].

Als Organozinnmercaptide seien auch die Verbindungen der Formel IVc genannt,

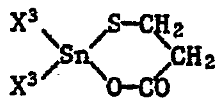

(IVc)

worin $X^3$ $C_1$–$C_{20}$Alkyl ist.

II) <u>Organozinnsulfide</u>, wie z.B. Di-($C_1$-$C_{18}$Alkyl)zinnsulfide bzw. ($C_1$–$C_{18}$Alkyl)zinnthiostannonsäuren, insbesondere das cyclische Di-n-butylzinnsulfid der Formel IVd und die adamantanartige n-Butylthiostannonsäure der Formel IVe.

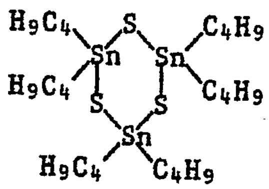

(IVd),

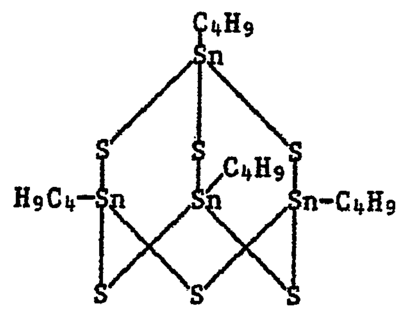

(IVe)

III) <u>Organozinncarboxylate</u>, insbesondere solche der Formel IVf,

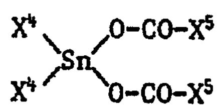

(IVf)

worin $X^4$ und $X^5$ $C_1$–$C_{20}$Alkyl sind und $X^5$ zusätzlich ($C_1$–$C_{20}$Alkyl)–O–CO–CH=CH– bedeutet.

$X^4$ und $X^5$ sind bevorzugt $C_1$–$C_{10}$Alkyl. Besonders bevorzugt ist $X^4$ als n-Butyl oder n-Octyl.

Von Interesse ist die Verbindung Di-n-butylzinn-bis[methylmaleat].

Als Organozinncarboxylate seien auch die Verbindungen der Formel IVg genannt,

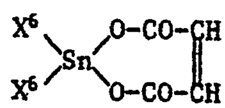

(IVg)

worin $X^6$ $C_1$–$C_{20}$Alkyl bedeutet.

<u>Beispiele für Bleiverbindungen sind:</u>

Tribasisches Bleisulfat 3 $PbO \cdot PbSO_4 \cdot H_2O$
Dibasisches Bleiphosphit 2 $PbO \cdot PbHPO_3 \cdot \frac{1}{2} H_2O$
Dibasisches Bleiphthalat 2 $PbO \cdot Pb(OOC)_2\ C_6H_4$
Dibasisches Bleistearat 2 $PbO \cdot Pb(OOCC_{17}H_{35})_2$
Neutrales Bleistearat $Pb(OOCC_{17}H_{35})_2$
Dibasisches Bleicarbonat $2PbO \cdot PbCO_3$

Beispiele für organische Antimonverbindungen sind:

Antimonmercaptide, insbesondere Verbindungen der Formel IVh,

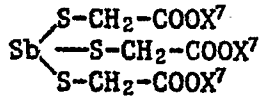

(IVh)

worin $X^7$ $C_4$–$C_{18}$Alkyl, bevorzugt Isooctyl, bedeutet.

Vorteilhaft ist es z.B. auch, die erfindungsgemässen Verbindungen zusammen mit einem Gemisch aus Barium/Zink-, Calcium/Zink- oder Magnesium/Zink-Carboxylaten einzusetzen. Es ist besonders vorteilhaft, wenn diese Gemische zusätzlich noch eine Organozinnverbindung enthalten. Weitere, die Wirkung unterstützende Komponenten eines solchen Stabilisatorsystems sind Phosphite, wie beispielsweise Triphenyl-, Trikresyl, Tris[p-nonylphenyl]- oder Tricyclohexyl-phosphit und Trialkylphosphite, insbesondere Trioctyl-, Tridecyl-, Tridodecyl-, Tritetradecyl-, Tristearyl- oder Trioleylphosphit, und besonders bevorzugt Aryl-dialkyl- sowie Alkyl-diarylphosphite, wie z.B. Phenyl-didecyl-, Nonylphenyl-didecyl-, (2,4-Di-tert-butyl-phenyl)-didodecyl- oder (2,6-Di-tert-butylphenyl)-didodecylphosphit.

Die Erfindung betrifft daher auch ein chlorhaltiges Polymerisat enthaltend eine oder mehrere Verbindungen der Formeln Ia* und/oder Ib* und zusätzlich mindestens ein Me(II)-Carboxylat, wobei Me(II) Ba, Ca, Mg, Cd oder Zn bedeutet.

Ebenfalls Gegenstand der Erfindung ist ein chlorhaltiges Polymerisat enthaltend eine oder mehrere Verbindungen der Formeln Ia* und/oder Ib* und zusätzlich mindestens eine Organozinnverbindung oder ein Antimonmercaptid.

Die Einarbeitung der Stabilisatorkomponenten in das chlorhaltige Polymerisat erfolgt am günstigsten wie üblich auf einem 2-Walzenstuhl bei Temperaturen zwischen 150 und 200°C. Im allgemeinen lässt sich eine genügende Homogenisierung innerhalb von 5 bis 15 Minuten erreichen. Die Zugabe Komponenten kann einzeln oder gemeinsam als Vorgemisch erfolgen. Als zweckmässig hat sich ein flüssiges Vorgemisch erwiesen, d.h. es wird in Gegenwart von indifferenten Lösungsmitteln und/oder Weichmachern gearbeitet.

Die bekannten Thermostabilisatoren können in dem zu stabilisierenden Material in einer dem Fachmann bekannten Konzentration vorliegen, wie zum Beispiel in Mengen von 0,05 bis 5 Gew.%.

Die Verbindungen der Formeln Ia* und/oder Ib* werden beispielsweise in Mengen von 0,1 bis 1 Gew.% in das chlorhaltige Polymerisat eingearbeitet.

Die Angabe Gew.% bezieht sich jeweils auf das zu stabilisierende Material.

Zusätzlich können die chlorhaltigen Polymerisate in üblichen Mengen herkömmliche PVC-Stabilisatoren enthalten, wie beispielsweise Epoxyverbindungen, vorzugsweise epoxidierte Fettsäureester, insbesondere epoxidiertes Sojabohnenöl, oder phenolische Antioxidantien.

Je nach dem Verwendungszweck der Polymerisate können vor oder bei der Einarbeitung der Stabilisatoren auch weitere Zusätze eingearbeitet werden, wie zum Beispiel Gleitmittel (bevorzugt Montanwachse oder Glycerinester), Fettsäureester, Paraffine, Weichmacher, Füllstoffe, Russ, Asbest, Kaolin, Talk, Glasfasern, Modifikatoren (wie etwa Schlagzäh-Zusätze), optische Aufheller, Pigmente, Lichtschutzmittel, UV-Absorber, Flammschutzmittel oder Antistatika.

Die Verbindungen der Formeln Ia, Ia*, Ib und Ib* können nach bekannten Verfahren hergestellt werden, beispielsweise durch folgende Reaktion:

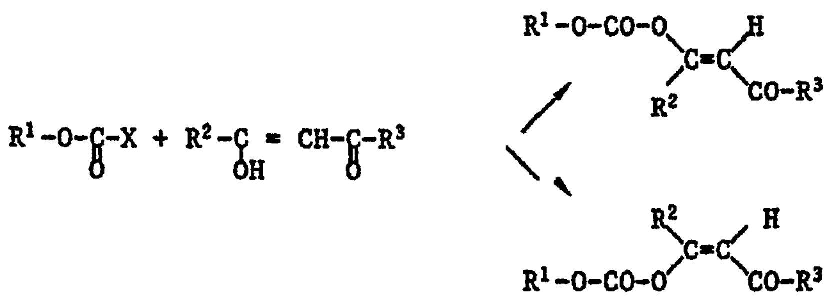

oder wenn $R^1$ eine Gruppe der Formel IIIa oder IIIb ist, auch durch Umsetzung von

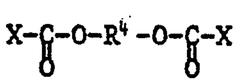 mit 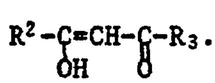

X bedeutet beispielsweise Halogen, bevorzugt Cl, und die Reste $R^1$, $R^2$, $R^3$ und $R^4$ besitzen die in den vorangehenden Ausführungen angegebenen Bedeutungen. Die Umsetzung erfolgt zweckmässigerweise in einem inerten Lösungsmittel, wie zum Beispiel Toluol oder Dibutyläther, in Gegenwart eines Protonenakzeptors. Als Protonenakzeptoren eignen sich beispielsweise tertiäre Amine, wie Trimethylamin, Triethylamin, Pyridin, N-Methylpiperidin und ähnliche Verbindungen. Die Reaktionstemperatur liegt vorzugsweise zwischen 0° und 25°C.

Die Ausgangsprodukte sind im Handel erhältlich oder können nach bekannten Verfahren hergestellt werden.

Die Erfindung betrifft auch die Verwendung von Verbindungen der Formeln Ia* und Ib* zum Stabilisieren von chlorhaltigen Polymerisaten.

Die folgenden Beispiele erläutern die Erfindung weiter. Alle Mengenangaben entsprechen Gewichtsteilen soweit nicht anders angegeben.

<u>Beispiel 1: Herstellung von 1-n-Hexadecyloxycarbonyloxy-1-methyl-2-acetylethen</u> (Verbindung 1)

30,4 g (0,1 Mol) n-Hexadecylchloroformiat, 15 g (0,15 Mol) Acetylaceton und 80 ml Diethyläther werden in einem 250 ml Kolben vorgelegt. 11 g (0,11 Mol) Triethylamin gelöst in 20 ml Diethyläther werden bei einer Temperatur unterhalb von 10°C unter Rühren innerhalb von 25 Minuten zugegeben. Das Gemisch wird auf Raumtemperatur erwärmt und 2 Tage stehengelassen. Der Niederschlag wird abfiltriert und mit Diethyläther gewaschen. Bei dem Rückstand handelt es sich um 13,8 g Triethylaminhydrochlorid (berechnet: 13,8 g). Das Filtrat wird zweimal mit Wasser gewaschen und dann über $Na_2SO_4$ getrocknet. Die Lösung wird zunächst mit Hilfe eines Rotationsverdampfers eingeengt und anschliessend wird das restliche Acetylaceton und der Diethyläther mit einer Oelpumpe abdestilliert. Man erhält farblose Kristalle, die einen Schmelzpunkt von 33–35°C besitzen.
Ausbeute: 32,4 g (= 87,9% der Theorie)

<u>Beispiel 2: Herstellung von 1-n-Hexadecyloxycarbonyloxy-1-phenyl-2-benzoylethen</u> (Verbindung 2)

Die Herstellung erfolgt nach dem im Beispiel 1 beschriebenen Verfahren. Es werden 44,8 g (0,2 Mol) Dibenzoylmethan, 61,0 g (0,2 Mol) n-Hexadecyl-chloroformiat und 200 ml Diethyläther sowie 22 g (0,22 Mol) Triethylamin eingesetzt. Man erhält eine gelbe, viskose Flüssigkeit, die auskristallisiert. Die Kristalle besitzen einen Schmelzpunkt von 39–40°C.
Ausbeute: 95,4 g (= 96,8% der Theorie)

Kristallisiert man das Produkt aus Isopropanol um, so erhöht sich der Schmelzpunkt auf 44–45°C.

<u>Beispiel 3: Herstellung von 1-n-Hexadecyloxycarbonyloxy-1-methyl-2-benzoylethen</u> (Verbindung 3)

Die Herstellung erfolgt nach dem im Beispiel 1 beschriebenen Verfahren. Es werden 17,8 g (0,11 Mol) Benzoylaceton, 30,5 g (0,1 Mol) n-Hexadecylchloroformiat und 100 ml Diethyläther sowie 11 g (0,11 Mol) Triethylamin eingesetzt. Man erhält 34,7 g Rohprodukt, welches aus einem Gemisch von 85 ml Isopropanol und 10 ml Wasser umkristallisiert wird. Die weissen Kristalle besitzen einen Schmelzpunkt von 31°C.
Ausbeute: 23,5 g (= 55,9% der Theorie)

<u>Beispiel 4: Herstellung von 1-(2,2,4-Trimethylpentyloxycarbonyloxy)-1-methyl-2-acetylethen</u> (Verbindung 4)

Die Herstellung erfolgt analog zu dem im Beispiel 1 beschriebenen Verfahren, wobei 2,2,4-Trimethylpentylchloroformiat mit Acetylaceton umgesetzt wird. Das Produkt besitzt bei 0,133 mbar einen Siedepunkt von 104°C.

Die nach den Beispielen 1–4 hergestellten Produkte liegen als eine Mischung von cis- und trans-Isomeren vor.

<u>Beispiel 5:</u>

Eine Trockenmischung, bestehend aus 100 Teilen S-PVC (K-Wert 64), 3 Teilen epoxidiertes Sojabohnenöl, 0,35 Teilen Ca-Stearat, 0,15 Teilen Zn-Stearat, 0,5 Teilen Didecyl-phenyl-phosphit und 0,5 Teilen des in Tabelle 1 angegebenen Stabilisators, wird auf einem Mischwalzwerk 5 Minuten bei 180°C gewalzt. Vom gebildeten 0,3 mm dicken Walzfell werden Folienmuster in einem Testofen bei 180°C thermisch belastet und es wird im angegebenen Zeitintervall an einem Prüfmuster der "Yellowness Index" (YI) nach ASTM D 1925 bestimmt. Die Ergebnisse sind in Tabelle 1 zusammengefasst.

Tabelle 1

| Stabilisator | YI nach Belastungszeit in Minuten | | | | | | |
|---|---|---|---|---|---|---|---|
| | 0 | 5 | 10 | 15 | 20 | 25 | 30 |
| ohne | 11,6 | 30,7 | 44,9 | | | | |
| Verbindung 1 | 1,2 | 4,1 | 10,1 | 19,6 | 50 | 84 | |
| Verbindung 3 | 2,3 | 9,3 | 14,7 | 18,5 | 22,6 | 62 | 93 |

Beispiel 6:

Eine Trockenmischung bestehend aus der in nachfolgenden Rezepturen angegebenen Zusammensetzung wird 5 Minuten auf einem Mischwalzwerk bei 190°C zu einem Walzfell verarbeitet. Das Walzfell wird anschliessend eine Minute bei 180°C und einem Druck von 200 bar zu Folienmustern von 0,5 mm Dicke verpresst. Diese Pressplatten werden mit Licht ($\lambda$ > 290 nm) bestrahlt. Der Verlauf des lichtinduzierten Abbaus wird nach der auftretenden Gelbverfärbung ("Yellowness Index" gemäss ASTM D 1925–70) beurteilt.

Die Ergebnisse sind in den nachstehenden Tabellen 2 und 3 zusammengefasst.

Tabelle 2

| | |
|---|---|
| Rezeptur: | |
| S-PVC (K-Wert 68) | 100 Teile |
| Ca-Stearat | 0,35 Teile |
| Zn-Stearat | 0,15 Teile |
| epoxidiertes Sojabohnenöl | 3,0 Teile |
| Didecyl-phenyl-phosphit | 0,55 Teile |
| Stabilisator gemäss folgender Tabelle | |

| Stabilisator | «Yellowness Index» nach Belichtungszeit in Stunden | | | | | | | | |
|---|---|---|---|---|---|---|---|---|---|
| | 0 | 24 | 48 | 72 | 96 | 120 | 144 | 168 | 192 |
| ohne | 21,6 | 24,9 | 28,3 | 31,5 | 34,0 | 37,6 | 41,2 | 44,5 | 47,1 |
| 0,3 Teile Verbindung | 15,9 | 21,7 | 24,8 | 27,0 | 28,7 | 30,5 | 32,4 | 34,7 | 36,0 |

Tabelle 3

| | |
|---|---|
| S-PVC (K-Wert 68) | 100 Teile |
| Verbindung 3 | 0,5 Teile |
| Costabilisator gemäss folgender Tabelle | |

| Costabilisator | «Yellowness Index» nach Belichtungszeit in Stunden | | | | | | | | |
|---|---|---|---|---|---|---|---|---|---|
| | 0 | 24 | 48 | 72 | 96 | 120 | 144 | 168 | 192 |
| Costabilisator A | 10,6 | 14,9 | 17,8 | 21,1 | 25,0 | 29,4 | 33,9 | 38,6 | 43,2 |
| Costabilisator B | 9,7 | 13,3 | 16,5 | 20,3 | 24,5 | 28,9 | 32,7 | 36,5 | 40,2 |

Costabilisator A: 0,86 Teile Dibutylzinn-bis[isooctylthioglykolat] und 0,14 Teile epoxidiertes Isobutyloleat

Costabilisator B: 1 Teil n-Butylzinn-tris[n-tetradecylthioglykolat]

**Patentansprüche für die Vertragsstaaten: BE, DE, FR, GB, IT**

1. Verbindungen der Formeln Ia und Ib

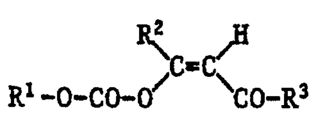 (Ia), 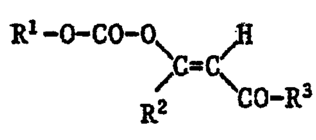 (Ib),

worin $R^1$ $C_6$–$C_{22}$Alkyl, Phenyl, durch ein oder zwei $C_1$–$C_9$Alkyl substituiertes Phenyl, $C_5$–$C_7$Cycloalkyl oder eine Gruppe der Formel IIa oder IIb ist

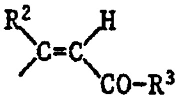 (IIa), 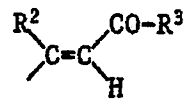 (IIb)

oder $R^1$ eine Gruppe der Formel IIIa oder IIIb ist

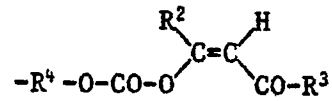 (IIIa),

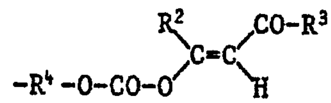 (IIIb),

$R^2$ und $R^3$ unabhängig voneinander $C_1$–$C_{20}$Alkyl, Phenyl, durch ein oder zwei $C_1$–$C_9$Alkyl substituiertes Phenyl oder $C_5$–$C_7$Cycloalkyl sind und $R^4$ $C_2$–$C_{12}$Alkylen ist.

2. Verbindungen der Formeln Ia und Ib gemäss Anspruch 1, worin $R^2$ und $R^3$ unabhängig voneinander $C_2$–$C_{18}$Alkyl, Phenyl, durch ein oder zwei $C_1$–$C_9$Alkyl substituiertes Phenyl oder $C_5$–$C_7$Cycloalkyl sind.

3. Verbindungen der Formeln Ia und Ib gemäss Anspruch 1, worin $R^1$ $C_6$–$C_{22}$Alkyl, Phenyl, durch ein oder zwei $C_1$–$C_9$Alkyl substituiertes Phenyl, $C_5$–$C_7$Cycloalkyl oder eine Gruppe der Formel IIIa oder IIIb ist.

4. Verbindungen der Formeln Ia und Ib gemäss Anspruch 1, worin $R^1$ $C_6$–$C_{22}$Alkyl, Phenyl, durch ein oder zwei $C_1$–$C_9$Alkyl substituiertes Phenyl oder $C_5$–$C_7$Cycloalkyl ist.

5. Verbindungen der Formeln Ia und Ib gemäss Anspruch 1, worin $R^1$ $C_6$–$C_{22}$Alkyl ist, $R^2$ und $R^3$ unabhängig voneinander $C_1$–$C_4$Alkyl, Phenyl oder durch ein oder zwei $C_1$–$C_9$Alkyl substituiertes Phenyl bedeuten.

6. Verbindungen der Formeln Ia und Ib gemäss Anspruch 1, worin $R^1$ $C_6$–$C_{16}$Alkyl ist und $R^2$ und $R^3$ unabhängig voneinander Methyl oder Phenyl sind.

7. Verbindungen der Formeln Ia und Ib gemäss Anspruch 1, worin $R^1$ eine Gruppe der Formel IIIa oder IIIb ist.

8. Verbindungen der Formeln Ia und Ib gemäss Anspruch 1, worin $R^1$ $C_6$–$C_{22}$Alkyl ist.

9. Verbindungen der Formeln Ia und Ib gemäss Anspruch 1, worin $R^3$ Phenyl oder durch ein oder zwei $C_1$–$C_9$Alkyl substituiertes Phenyl bedeutet.

10. 1-n-Hexadecyloxycarbonyloxy-1-methyl-2-acetylethen gemäss Anspruch 1.

11. 1-n-Hexadecyloxycarbonyloxy-1-phenyl-2-benzoylethen gemäss Anspruch 1.

12. 1-n-Hexadecyloxycarbonyloxy-1-methyl-2-benzoylethen gemäss Anspruch 1.

13. Gegen den schädigenden Einfluss von Licht und/oder Wärme stabilisierte chlorhaltige Polymerisate, enthaltend eine oder mehrere Verbindungen der Formeln Ia* und/oder Ib*

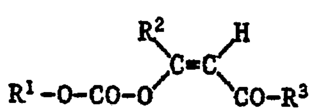 (Ia*), 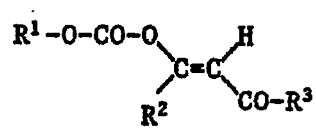 (Ib*),

worin $R^1$ $C_1$–$C_{22}$Alkyl, Phenyl, durch ein oder zwei $C_1$–$C_9$Alkyl substituiertes Phenyl, $C_5$–$C_7$Cycloalkyl oder eine Gruppe der Formel IIa oder IIb ist

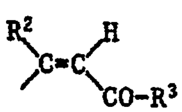 (IIa), 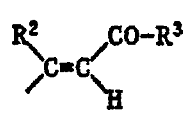 (IIb)

oder $R^1$ eine Gruppe der Formel IIIa oder IIIb ist

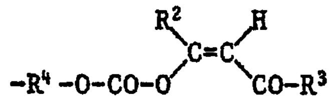

(IIIa),

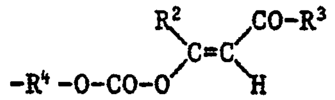

(IIIb),

$R^2$ und $R^3$ unabhängig voneinander $C_1$–$C_{20}$Alkyl, Phenyl, durch ein oder zwei $C_1$–$C_9$Alkyl substituiertes Phenyl oder $C_5$–$C_7$Cycloalkyl sind und $R^4$ $C_2$–$C_{12}$Alkylen ist.

14. Chlorhaltiges Polymerisat gemäss Anspruch 13, enthaltend mindestens ein Me(II)-Carboxylat, wobei Me(II) Ba, Ca, Mg, Cd oder Zn bedeutet.

15. Chlorhaltiges Polymerisat gemäss Anspruch 13, enthaltend mindestens eine Organozinnverbindung.

16. Chlorhaltiges Polymerisat gemäss Anspruch 13, enthaltend mindestens ein Antimonmercaptid.

17. Chlorhaltiges Polymerisat gemäss Anspruch 13, dadurch gekennzeichnet, dass das stabilisierte chlorhaltige Polymerisat Polyvinylchlorid ist.

18. Verwendung der in Anspruch 13 definierten Verbindungen der Formeln Ia* und Ib* zum Stabilisieren von chlorhaltigen Polymerisaten.

**Patentansprüche für den Vertragsstaat: ES**

1. Verfahren zum Herstellen von Verbindungen der Formeln Ia und Ib

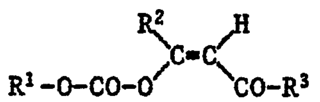

(Ia),

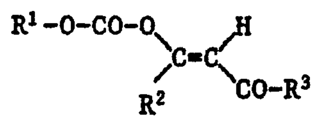

(Ib),

worin $R^1$ $C_6$–$C_{22}$Alkyl, Phenyl, durch ein oder zwei $C_1$–$C_9$Alkyl substituiertes Phenyl, $C_5$–$C_7$Cycloalkyl oder eine Gruppe der Formel IIa oder IIb ist

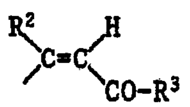

(IIa),

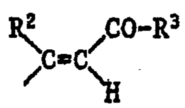

(IIb)

oder $R^1$ eine Gruppe der Formel IIIa oder IIIb ist

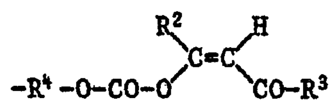

(IIIa),

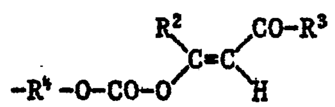

(IIIb),

$R^2$ und $R^3$ unabhängig voneinander $C_1$–$C_{20}$Alkyl, Phenyl, durch ein oder zwei $C_1$–$C_9$Alkyl substituiertes Phenyl oder $C_5$–$C_7$Cycloalkyl sind und $R^4$ $C_2$–$C_{12}$Alkylen ist, dadurch gekennzeichnet, dass eine Verbindung der Formel

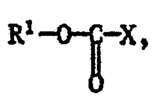

worin $R^1$ die oben angegebene Bedeutung hat und X Halogen ist, mit einer Verbindung der Formel

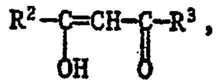

worin $R^2$ und $R^3$ die oben angegebenen Definitionen besitzen, umgesetzt wird.

2. Verfahren gemäss Anspruch 1, worin $R^2$ und $R^3$ unabhängig voneinander $C_2$–$C_{18}$Alkyl, Phenyl, durch ein oder zwei $C_1$–$C_9$Alkyl substituiertes Phenyl oder $C_5$–$C_7$Cycloalkyl sind.

3. Verfahren gemäss Anspruch 1, worin $R^1$ $C_6$–$C_{22}$Alkyl, Phenyl, durch ein oder zwei $C_1$–$C_9$Alkyl substituiertes Phenyl, $C_5$–$C_7$Cycloalkyl oder eine Gruppe der Formel IIIa oder IIIb ist.

4. Verfahren gemäss Anspruch 1, worin $R^1$ $C_6$–$C_{22}$Alkyl, Phenyl, durch ein oder zwei $C_1$–$C_9$Alkyl substituiertes Phenyl oder $C_5$–$C_7$Cycloalkyl ist.

5. Verfahren gemäss Anspruch 1, worin $R^1$ $C_6$–$C_{22}$Alkyl ist, $R^2$ und $R^3$ unabhängig voneinander $C_1$–$C_4$Alkyl, Phenyl oder durch ein oder zwei $C_1$–$C_9$Alkyl substituiertes Phenyl bedeuten.

6. Verfahren gemäss Anspruch 1, worin $R^1$ $C_6$–$C_{16}$Alkyl ist und $R^2$ und $R^3$ unabhängig voneinander Methyl oder Phenyl sind.

7. Verfahren gemäss Anspruch 1, worin $R^1$ eine Gruppe der Formel IIIa oder IIIb ist.

8. Verfahren gemäss Anspruch 1, worin $R^1$ $C_6$–$C_{22}$Alkyl ist.

9. Verfahren gemäss Anspruch 1, worin $R^3$ Phenyl oder durch ein oder zwei $C_1$–$C_9$Alkyl substituiertes Phenyl bedeutet.

10. Verfahren gemäss Anspruch 1 zum Herstellen von 1-n-Hexadecyloxycarbonyloxy-1-methyl-2-acetylethen, 1-n-Hexadecyloxycarbonyloxy-1-phenyl-2-benzoylethen und 1-n-Hexadecyloxycarbonyloxy-1-methyl-2-benzoylethen.

11. Gegen den schädigenden Einfluss von Licht und/oder Wärme stabilisierte chlorhaltige Polymerisate, enthaltend eine oder mehrere Verbindungen der Formeln Ia* und/oder Ib*

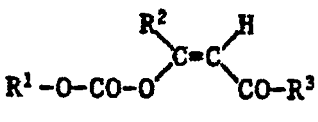 (Ia*), 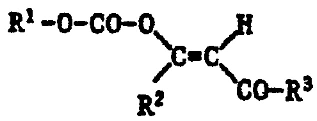 (Ib*),

worin $R^1$ $C_1$–$C_{22}$Alkyl, Phenyl, durch ein oder zwei $C_1$–$C_9$Alkyl substituiertes Phenyl, $C_5$–$C_7$Cycloalkyl oder eine Gruppe der Formel IIa oder IIb ist

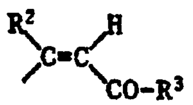 (IIa), 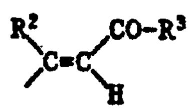 (IIb)

oder $R^1$ eine Gruppe der Formel IIIa oder IIIb ist

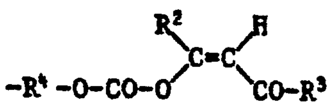 (IIIa),

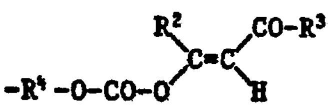 (IIIb),

$R^2$ und $R^3$ unabhängig voneinander $C_1$–$C_{20}$Alkyl, Phenyl, durch ein oder zwei $C_1$–$C_9$Alkyl substituiertes Phenyl oder $C_5$–$C_7$Cycloalkyl sind und $R^4$ $C_2$–$C_{12}$Alkylen ist.

12. Chlorhaltiges Polymerisat gemäss Anspruch 11, enthaltend mindestens ein Me(II)-Carboxylat, wobei Me(II) Ba, Ca, Mg, Cd oder Zn bedeutet.

13. Chlorhaltiges Polymerisat gemäss Anspruch 11, enthaltend mindestens eine Organozinnverbindung.

14. Chlorhaltiges Polymerisat gemäss Anspruch 11, enthaltend mindestens ein Antimonmercaptid.

15. Chlorhaltiges Polymerisat gemäss Anspruch 11, dadurch gekennzeichnet, dass das stabilisierte chlorhaltige Polymerisat Polyvinylchlorid ist.

16. Verfahren zum Stabilisieren von einem chlorhaltigen Polymerisat gegen den schädigenden Einfluss von Licht und/oder Wärme, dadurch gekennzeichnet, dass in das chlorhaltige Polymerisat eine für die Stabilisierung ausreichende Menge mindestens einer der in Anspruch 11 definierten Verbindungen der Formeln Ia* und/oder Ib* eingearbeitet wird.

**Claims for the Contracting States: BE, DE, FR, GB, IT**

1. A compound of formula Ia or Ib

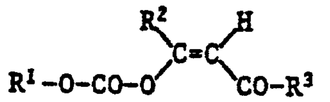 (Ia), 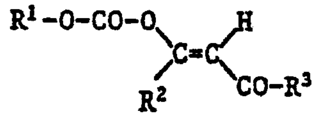 (Ib),

in which $R^1$ is $C_6$–$C_{22}$alkyl, phenyl or phenyl which is substituted by one or two $C_1$–$C_9$alkyl groups, or is $C_5$–$C_7$cycloalkyl or a group of formula IIa or IIb

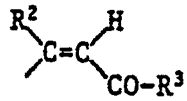 (IIa), 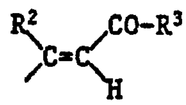 (IIb)

or $R^1$ is a group of formula IIIa or IIIb

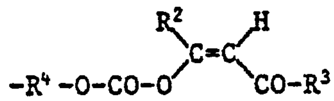 (IIIa),

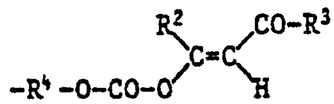 (IIIb),

$R^2$ and $R^3$ independently of one another are $C_1$–$C_{20}$alkyl, phenyl or phenyl which is substituted by one or two $C_1$–$C_9$alkyl groups, or are $C_5$–$C_7$cycloalkyl, and $R^4$ is $C_2$–$C_{12}$alkylene.

2. A compound of formula Ia or Ib according to claim 1, in which $R^2$ and $R^3$ independently of one another are $C_2$–$C_{18}$alkyl, phenyl or phenyl which is substituted by one or two $C_1$–$C_9$alkyl groups, or are $C_5$–$C_7$-cycloalkyl.

3. A compound of formula Ia or Ib according to claim 1, in which $R^1$ is $C_6$–$C_{22}$alkyl, phenyl or phenyl which is substituted by one or two $C_1$–$C_9$alkyl groups, or is $C_5$–$C_7$cycloalkyl or a group of formula IIIa or IIIb.

4. A compound of formula Ia or Ib according to claim 1, in which $R^1$ is $C_6$–$C_{22}$alkyl, phenyl or phenyl which is substituted by one or two $C_1$–$C_9$alkyl groups, or is $C_5$–$C_7$cycloalkyl.

5. A compound of formula Ia or Ib according to claim 1, in which $R^1$ is $C_6$–$C_{22}$alkyl, $R^2$ and $R^3$ independently of one another are $C_1$–$C_4$alkyl, phenyl or phenyl which is substituted by one or two $C_1$–$C_9$alkyl groups.

6. A compound of formula Ia or Ib according to claim 1, in which $R^1$ is $C_6$–$C_{16}$alkyl and $R^2$ and $R^3$ independently of one another are methyl or phenyl.

7. A compound of formula Ia or Ib according to claim 1, in which $R^1$ is a group of formula IIIa or IIIb.

8. A compound of formula Ia or Ib according to claim 1, in which $R^1$ is $C_6$–$C_{22}$alkyl.

9. A compound of formula Ia or Ib according to claim 1, in which $R^3$ is phenyl or phenyl which is substituted by one or two $C_1$–$C_9$alkyl groups.

10. 1-n-Hexadecyloxycarbonyloxy-1-methyl-2-acetylethene according to claim 1.

11. 1-n-Hexadecyloxycarbonyloxy-1-phenyl-2-benzoylethene according to claim 1.

12. 1-n-Hexadecyloxycarbonyloxy-1-methyl-2-benzoylethene according to claim 1.

13. A chlorinated polymer, stabilised against the harmful influence of light and/or heat, which contains one or more compounds of formulae Ia* and/or Ib*

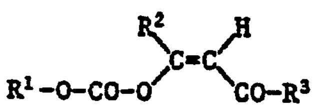 (Ia*), 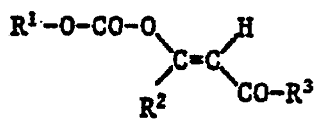 (Ib*),

in which $R^1$ is $C_1$–$C_{22}$alkyl, phenyl or phenyl which is substituted by one or two $C_1$–$C_9$alkyl groups, or is $C_5$–$C_7$cycloalkyl or a group of formula IIa or IIb

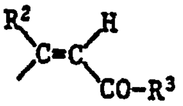 (IIa), 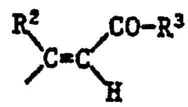 (IIb)

or $R^1$ is a group of formula IIIa or IIIb

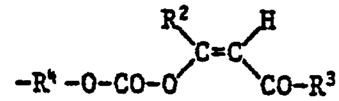 (IIIa),

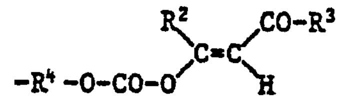 (IIIb),

and $R^2$ and $R^3$ independently of one another are $C_1$–$C_{20}$alkyl, phenyl or phenyl which is substituted by one or two $C_1$–$C_9$alkyl groups, or are $C_5$–$C_7$cycloalkyl, and $R^4$ is $C_2$–$C_{12}$alkylene.

14. A chlorinated polymer according to claim 13, which contains at least one Me(II) carboxylate, where Me(II) is Ba, Ca, Mg, Cd or Zn.

15. A chlorinated polymer according to claim 13, which contains at least one organotin compound.

16. A chlorinated polymer according to claim 13, which contains at least one antimony mercaptide.

17. A chlorinated polymer according to claim 13, wherein the stabilised chlorinated polymer is polyvinyl chloride.

18. Use of the compounds of formulae Ia* and Ib* defined in claim 13 for stabilising chlorinated polymers.

**Claims for the Contracting States: ES**

1. A process for the preparation of a compound of formula Ia or Ib

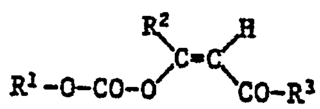 (Ia), 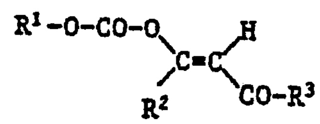 (Ib),

in which $R^1$ is $C_6$–$C_{22}$alkyl, phenyl or phenyl which is substituted by one or two $C_1$–$C_9$alkyl groups, or is $C_5$–$C_7$cycloalkyl or a group of formula IIa or IIb

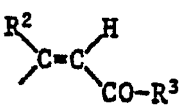 (IIa), 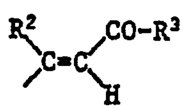 (IIb)

or $R^1$ is a group of formula IIIa or IIIb

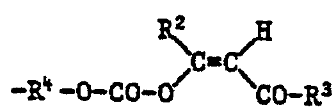 (IIIa),

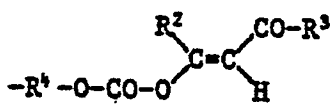 (IIIb),

$R^2$ and $R^3$ independently of one another are $C_1$–$C_{20}$alkyl, phenyl or phenyl which is substituted by one or two $C_1$–$C_9$alkyl groups, or are $C_5$–$C_7$cycloalkyl, and $R^4$ is $C_2$–$C_{12}$alkylene, which comprises reacting a compound of formula

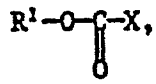

in which $R^1$ is as defined above and X is halogen, with a compound of formula

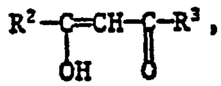

in which $R^2$ and $R^3$ are as defined above.

2. A process according to claim 1, in which $R^2$ and $R^3$ independently of one another are $C_2$–$C_{18}$alkyl, phenyl or phenyl which is substituted by one or two $C_1$–$C_9$alkyl groups, or are $C_5$–$C_7$cycloalkyl.

3. A process according to claim 1, in which $R^1$ is $C_6$–$C_{22}$alkyl, phenyl or phenyl which is substituted by one or two $C_1$–$C_9$alkyl groups, or is $C_5$–$C_7$cycloalkyl or a group of formula IIIa or IIIb.

4. A process according to claim 1, in which $R^1$ is $C_6$–$C_{22}$alkyl, phenyl or phenyl which is substituted by one or two $C_1$–$C_9$alkyl groups, or is $C_5$–$C_7$cycloalkyl.

5. A process according to claim 1, in which $R^1$ is $C_6$–$C_{22}$alkyl, $R^2$ and $R^3$ independently of one another are $C_1$–$C_4$alkyl, phenyl or phenyl which is substituted by one or two $C_1$–$C_9$alkyl groups.

6. A process according to claim 1, in which $R^1$ is $C_6$–$C_{16}$alkyl and $R^2$ and $R^3$ independently of one another are methyl or phenyl.

7. A process according to claim 1, in which $R^1$ is a group of formula IIIa or IIIb.

8. A process according to claim 1, in which $R^1$ is $C_6$–$C_{22}$alkyl.

9. A process according to claim 1, in which $R^3$ is phenyl or phenyl which is substituted by one or two $C_1$–$C_9$alkyl groups.

10. A process according to claim 1 for the preparation of 1-n-hexadecyloxycarbonyloxy-1-methyl-2-acetylethene, 1-n-hexadecyloxycarbonyloxy-1-phenyl-2-benzoylethene and 1-n-hexadecyloxycarbonyloxy-1-methyl-2-benzoylethene.

11. A chlorinated polymer, stabilised against the harmful influence of light and/or heat, which contains one or more compounds of formulae Ia* and/or Ib*

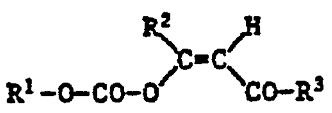 (Ia*), 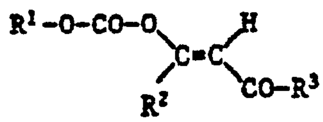 (Ib*),

in which $R^1$ is $C_1$–$C_{22}$alkyl, phenyl or phenyl which is substituted by one or two $C_1$–$C_9$alkyl groups, or is $C_5$–$C_7$cycloalkyl or a group of formula IIa or IIb

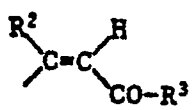 (IIa), 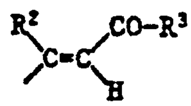 (IIb)

or $R^1$ is a group of formula IIIa or IIIb

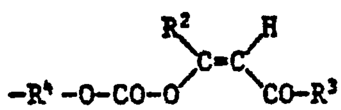 (IIIa),

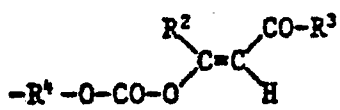 (IIIb),

and $R^2$ and $R^3$ independently of one another are $C_1$–$C_{20}$alkyl, phenyl or phenyl which is substituted by one or two $C_1$–$C_9$alkyl groups, or are $C_5$–$C_7$cycloalkyl, and $R^4$ is $C_2$–$C_{12}$alkylene.

12. A chlorinated polymer according to claim 11, which contains at least one Me(II) carboxylate, where Me(II) is Ba, Ca, Mg, Cd or Zn.

13. A chlorinated polymer according to claim 11, which contains at least one organotin compound.

14. A chlorinated polymer according to claim 11, which contains at least one antimony mercaptide.

15. A chlorinated polymer according to claim 11, wherein the stabilised chlorinated polymer is polyvinyl chloride.

16. A process for stabilising a chlorinated polymer against the harmful influence of light and/or heat, which comprises incorporating into the chlorinated polymer an effective stabilising amount of at least one of the compounds of formulae Ia* and/or Ib* defined in claim 11.

**Revendications pour les Etats Contractants: BE, DE, FR, GB, IT**

1. Composés répondant à l'une des formules Ia et Ib:

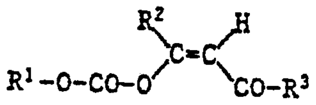 (Ia), 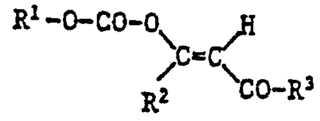 (Ib),

dans lesquelles $R^1$ représente un alkyle en $C_6$–$C_{22}$, un phényle, un phényle porteur d'un ou de deux alkyles en $C_1$–$C_9$, un cycloalkyle en $C_5$–$C_7$ ou un radical de formule IIa ou IIb:

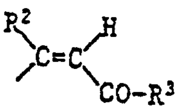 (IIa), 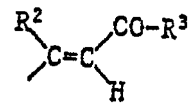 (IIb),

ou $R^1$ représente un radical de formule IIIa ou IIIb:

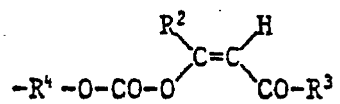 (IIIa),

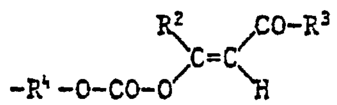 (IIIb),

$R^2$ et $R^3$ représentent chacun, indépendamment l'un de l'autre, un alkyle en $C_1$–$C_{20}$, un phényle, un phényle porteur d'un ou deux alkyles en $C_1$–$C_9$ ou un cycloalkyle en $C_6$–$C_7$, et $R^4$ représente un alkylène en $C_2$–$C_{12}$.

2. Composés de formules Ia et Ib selon la revendication 1 dans lesquels $R^2$ et $R^3$ représentent chacun, indépendamment l'un de l'autre, un alkyle en $C_2$–$C_{18}$, un phényle, un phényle porteur d'un ou de deux alkyles en $C_1$–$C_9$ ou cycloalkyle en $C_5$–$C_7$.

3. Composés de formules Ia et Ib selon la revendication 1 dans lesquels $R^1$ représente un alkyle en $C_6$–$C_{22}$, un phényle, un phényle porteur d'un ou de deux alkyles en $C_1$–$C_9$, un cycloalkyle en $C_5$–$C_7$ ou un radical de formule IIIa ou IIIb.

4. Composés de formules Ia et Ib selon la revendication 1 dans lesquels $R^1$ représente un alkyle en $C_6$–$C_{22}$, un phényle, un phényle porteur d'un ou de deux alkyles en $C_1$–$C_9$ ou un cycloalkyle en $C_5$–$C_7$.

5. Composés de formules Ia et Ib selon la revendication 1 dans lesquels $R^1$ représente un alkyle en $C_6$–$C_{22}$, $R^2$ et $R^3$ représentent chacun, indépendamment l'un de l'autre, un alkyle en $C_1$–$C_4$, un phényle ou un phényle porteur d'un ou de deux alkyles en $C_1$–$C_9$.

6. Composés de formules Ia et Ib selon la revendication 1 dans lesquels $R^1$ représente un alkyle en $C_6$–$C_{16}$, et $R^2$ et $R^3$ représentent chacun, indépendamment l'un de l'autre, un méthyle ou un phényle.

7. Composés de formules Ia et Ib selon la revendication 1 dans lesquels $R^1$ représente un radical de formule IIIa ou IIIb.

8. Composés de formules Ia et Ib selon la revendication 1 dans lesquels $R^1$ représente un alkyle en $C_6$–$C_{22}$.

9. Composés de formules Ia et Ib selon la revendication 1 dans lesquels $R^3$ représente un phényle ou un phényle porteur d'un ou de deux alkyles en $C_1$–$C_9$.

10. Composé selon la revendication 1, en l'espèce le n-hexadécyloxycarbonyloxy-1 méthyl-1 acétyl-2 éthène.

11. Composé selon la revendication 1, en l'espèce le n-hexadécyloxycarbonyloxy-1 phényl-1 benzoyl-2 éthène.

12. Composé selon la revendication 1, en l'espèce le n-hexadécyloxycarbonyloxy-1 méthyl-1 benzoyl-2 éthène.

13. Polymères chlorés stabilisés contre les effets destructeurs de la lumière et/ou de la chaleur qui contiennent un ou plusieurs composés répondant aux formules Ia* et/ou Ib*:

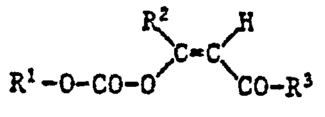 (Ia*), 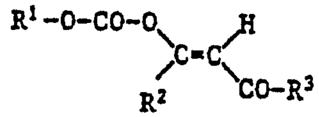 (Ib*),

dans lesquelles $R^1$ représente un alkyle en $C_1$–$C_{22}$, un phényle, un phényle porteur d'un ou de deux alkyles en $C_1$–$C_9$, un cycloalkyle en $C_5$–$C_7$ ou un radical répondant à l'une des IIa et IIb:

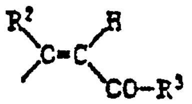 (IIa), 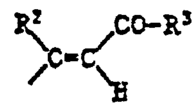 (IIb)

ou $R^1$ représente un radical de formule IIIa ou IIIb:

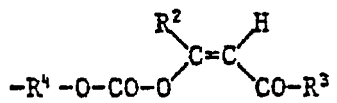 (IIIa),

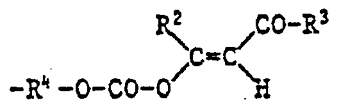 (IIIb),

$R^2$ et $R^3$ représentent chacun, indépendamment l'un de l'autre, un alkyle en $C_1$–$C_{20}$, un phényle, un phényle porteur d'un ou de deux alkyles en $C_1$–$C_9$ ou un cycloalkyle en $C_5$–$C_7$, et $R^4$ représente un alkylène en $C_2$–$C_{12}$.

14. Polymère chloré selon la revendication 13 qui contient au moins un carboxylate de Me(II) dans lequel Me(II) représente Ba, Ca, Mg, Cd ou Zn.

15. Polymère chloré selon la revendication 13 qui contient au moins un composé organostannique.

16. Polymère chloré selon la revendication 13 qui contient au moins un thiolate d'antimoine.

17. Polymère chloré selon la revendication 13 caractérisé en ce que le polymère chloré stabilisé est du poly-(chlorure de vinyle).

18. Application des composés de formules Ia* et Ib* définis à la revendication 13 pour la stabilisation de polymères chlorés.

**Revendications pour l'Etat Contractant: ES**

1. Procédé de préparation de composés répondant à l'une des formules Ia et Ib:

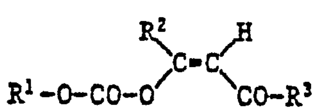 (Ia), 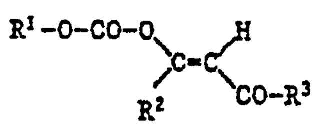 (Ib),

dans lesquelles $R^1$ représente un alkyle en $C_6$–$C_{22}$, un phényle, un phényle porteur d'un ou de deux alkyles en $C_1$–$C_9$, un cycloalkyle en $C_5$–$C_7$ ou un radical de formule IIa ou IIb:

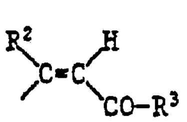 (IIa), 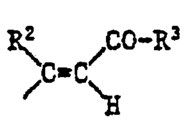 (IIb),

ou $R^1$ représente un radical de formule IIIa ou IIIb:

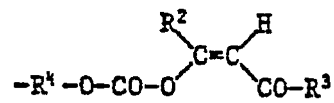 (IIIa),

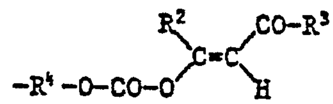 (IIIb),

$R^2$ et $R^3$ représentent chacun, indépendamment l'un de l'autre, un alkyle en $C_1$–$C_{20}$, un phényle, un phényle porteur d'un ou deux alkyles en $C_1$–$C_9$ ou un cycloalkyle en $C_5$–$C_7$, et $R^4$ représente un alkylène en $C_2$–$C_{12}$, procédé caractérisé en ce qu'on fait réagir un composé répondant à la formule:

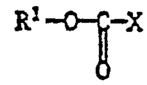

dans laquelle $R^1$ a la signification qui lui a été donnée ci-dessus et X représente un halogène, avec un composé répondant à la formule:

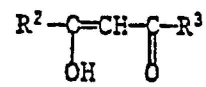

dans laquelle $R^2$ et $R^3$ ont les significations qui leur ont été données plus haut.

2. Procédé selon la revendication 1 dans lequel $R^2$ et $R^3$ représentent chacun, indépendamment l'un de l'autre, un alkyle en $C_2$–$C_{18}$, un phényle, un phényle porteur d'un ou de deux alkyles en $C_1$–$C_9$ ou un cycloalkyle en $C_5$–$C_7$.

3. Procédé selon la revendication 1 dans lequel $R^1$ représente un alkyle en $C_6$–$C_{22}$, un phényle, un phényle porteur d'un ou de deux alkyles en $C_1$–$C_9$, un cycloalkyle en $C_5$–$C_7$ ou un radical de formule IIIa ou IIIb.

4. Procédé selon la revendication 1 dans lequel $R^1$ représente un alkyle en $C_6$–$C_{22}$, un phényle, un phényle porteur d'un ou de deux alkyles en $C_1$–$C_9$ ou un cycloalkyle en $C_5$–$C_7$.

5. Procédé selon la revendication 1 dans lequel $R^1$ représente un alkyle en $C_6$–$C_{22}$, $R^2$ et $R^3$ représentent chacun, indépendamment l'un de l'autre, un alkyle en $C_1$–$C_4$, un phényle ou un phényle porteur d'un ou de deux alkyles en $C_1$–$C_9$.

6. Procédé selon la revendication 1 dans lequel $R^1$ représente un alkyle en $C_6$–$C_{16}$, et $R^2$ et $R^3$ représentent chacun, indépendamment l'un de l'autre, un méthyle ou un phényle.

7. Procédé selon la revendication 1 dans lequel $R^1$ représente un radical de formule IIIa ou IIIb.

8. Procédé selon la revendication 1 dans lequel $R^1$ représente un alkyle en $C_6$–$C_{22}$.

9. Procédé selon la revendication 1 dans lequel $R^3$ représente un phényle ou un phényle porteur d'un ou de deux alkyles en $C_1$–$C_9$.

10. Procédé selon la revendication 1 pour la préparation du n-hexadécyloxycarbonyloxy-1 méthyl-1 acétyl-2 éthène, du n-hexadécyloxycarbonyloxy-1 phényl-1 benzoyl-2 éthène, et du n-hexadécyloxycarbonyloxy-1 méthyl-1 benzoyl-2 éthène.

11. Polymères chlorés stabilisés contre les effets destructeurs de la lumière et/ou de la chaleur qui contiennent un ou plusieurs composés répondant aux formules Ia* et/ou Ib*:

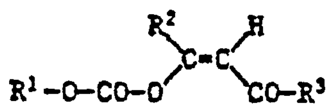 (Ia*), 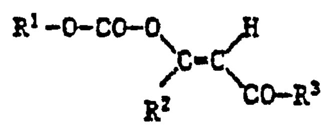 (Ib*),

dans lesquelles $R^1$ représente un alkyle en $C_1$–$C_{22}$, un phényle, un phényle porteur d'un ou de deux alkyles en $C_1$–$C_9$, un cycloalkyle en $C_5$–$C_7$ ou un radical répondant à l'une des formules IIa et IIb:

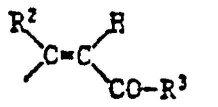 (IIa), 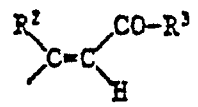 (IIb),

ou $R^1$ représente un radical de formule IIIa ou IIIb:

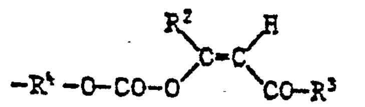 (IIIa),

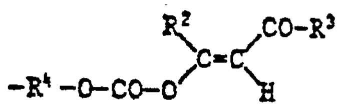 (IIIb),

$R^2$ et $R^3$ représentent chacun, indépendamment l'un de l'autre, un alkyle en $C_1$–$C_{20}$, un phényle, un phényle porteur d'un ou deux alkyles en $C_1$–$C_9$ ou un cycloalkyle en $C_5$–$C_7$, et $R^4$ représente un alkylène en $C_2$–$C_{12}$.

12. Polymère chloré selon la revendication 11 qui contient au moins un carboxylate de Me(II) dans lequel Me(II) représente Ba, Ca, Mg, Cd ou Zn.

13. Polymère chloré selon la revendication 11 qui contient au moins un composé organostannique.

14. Polymère chloré selon la revendication 11 qui contient au moins un thiolate d'antimoine.

15. Polymère chloré selon la revendication 11 caractérisé en ce que le polymère chloré stabilisé est un poly-(chlorure de vinyle).

16. Procédé pour stabiliser un polymère chloré contre les effets destructeurs de la lumière et/ou de la chaleur, procédé caractérisé en ce qu'on incorpore dans le polymère chloré une quantité efficace, pour la stabilisation, d'au moins un des composés des formules Ia* et/ou Ib* qui ont été définis à la revendication 11.